# EUROPEAN PATENT APPLICATION

(11) **EP 3 094 097 A1**
(43) Date of publication of application: **16.11.2016**
(21) Application number: 15735102.4
(22) Date of filing: 07.01.2015
(51) Int. Cl.: H04N 21/2343, H04N 21/2662

(54) **METHOD FOR DISPLAYING BIT DEPTH FOR PLAYING VIDEO USING DASH**

(30) Priority: 08.01.2014 KR 20140002487; 05.01.2015 KR 20150000758
(71) Applicant: Electronics and Telecommunications Research Institute, Daejeon 305-700 (KR)
(72) Inventor: LEE, Jin Young, Daejeon 305-700 (KR); YUN, Kug Jin, Daejeon 305-700 (KR); CHEONG, Won Sik, Daejeon 305-700 (KR)
(74) Representative: Betten & Resch
(86) International application number: PCT/KR2015/000137
(87) International publication number: WO 2015/105327

(57) **Abstract**

A method and an apparatus for an adaptive Hypertext Transfer Protocol (HTTP) streaming service using metadata on media content are disclosed. The media content includes a series of one or more periods. Each period may include one or more representations. The metadata may include information describing a relationship between the representations and information for terminals having different display bit depths.

## Description

### Technical Field

Exemplary embodiments relate to a technique for providing streaming content, and more particularly, to a method of representing bit depth of a played video.

### Background Art

Streaming is a method for transmitting and playing multimedia content, such as sounds and videos. A client may play content while receiving the content through streaming.

An adaptive streaming service means that a streaming service is provided through a communication method including a client request and a response of a server to the request.

A client may request a media sequence suitable for environments of the client, for example, a transmission channel, through the adaptive streaming service, and a server may provide a media sequence appropriate for a client request among media sequences with various qualities that the server has.

The adaptive streaming service may be provided based on various protocols. A Hypertext Transfer Protocol (HTTP) adaptive streaming service refers to an adaptive streaming service provided based on HTTP. A client of the HTTP adaptive streaming service may be provided with content from a server using HTTP and transmit a request related to the streaming service to the server.

### Disclosure of Invention

### Technical solutions

An aspect of the present invention is to provide an apparatus and a method for playing media content using representations including accessibility information.

Another aspect of the present invention is to provide an apparatus and a method for playing media content using information describing relationships between representations of media content.

Still another aspect of the present invention is to provide an apparatus and a method for playing media content using information on different representations for terminals having different display bit depths.

### Technical solutions

According to an aspect of the present invention, there is provided a media providing method including receiving metadata on media content including one or more periods, accessing segments of media based on information provided by the metadata, and decoding and rendering data on the media content comprised in the segments, wherein each period includes one or more representations of the media and each representation includes information for supporting disabled users having difficulties in perceiving the media content.

A media component of the representation may be improved to cope with a problem of a disabled user, and the improvement may include at least one of improvement in contrast and adjustment of color.

The information may indicate intended use of the representation and the intended use may include at least one of a sign language, a subtitle, a caption and a description.

The information may include an attribute providing reference to external MPEG-21 Digital Item Adaptation (DIA).

According to another aspect of the present invention, there is provided a media providing method including receiving metadata on media content including one or more periods, accessing segments of media based on information provided by the metadata, and decoding and rendering data on the media content included in the segments, wherein each period includes one or more representations of the media and the metadata includes an attribute describing a relationship between the one or more representations.

A first representation of the one or more representations may include an attribute indicating a list of part of the one or more representations and be used together with one of the part of the representations.

The first representation may be a representation for an audio description.

Each of the part of the representations may be a representation of a video component.

A first representation of the one or more representations may include an attribute indicating a list of part of the one or more representations.

One of the part of the representations may be used to replace the first representation.

According to still another aspect of the present invention, there is provided a media providing method including receiving metadata on media content including one or more periods, accessing segments of media based on information provided by the metadata, and decoding and rendering data on the media content included in the segments, wherein each period includes one or more representations of the media and each presentation includes a bit depth attribute used to select different representations for terminals having different display bit depths.

The bit depth attribute may indicate a number of bits for representing a luma or chroma sample of visual content.

According to yet another aspect of the present invention, there is provided a terminal including an access engine to receive metadata on media content including one or more periods, to receive segments of media based on information provided by the metadata, and to decode data on the media included in the segments, and a media engine to be provided with the data on the media from the access engine and to output the media, wherein each period includes one or more representations of the media and each representation includes information for supporting disabled users having difficulties in perceiving the media content.

According to still another aspect of the present invention, there is provided a terminal including an access engine to receive metadata on media content including one or more periods, to receive segments of media based on information provided by the metadata, and to decode data on the media included in the segments, and a media engine to be provided with the data on the media from the access engine and to output the media, wherein each period includes one or more representations of the media and the metadata includes an attribute describing a relationship between the one or more representations.

According to yet another aspect of the present invention, there is provided a terminal including an access engine to receive metadata on media content including one or more periods, to receive segments of media based on information provided by the metadata, and to decode data on the media included in the segments, and a media engine to be provided with the data on the media from the access engine and to output the media, wherein each period includes one or more representations of the media and each presentation includes a bit depth attribute used to select different representations for terminals having different display bit depths.

An apparatus and a method according to an aspect of the present invention may play media content using representations including accessibility information.

An apparatus and a method according to another aspect of the present invention may play media content using information describing relationships between representations of media content.

An apparatus and a method according to still another aspect of the present invention may play media content using information on different representations for terminals having different display bit depths.

### Brief Description of Drawings

FIG. 1 illustrates a high-level data model of Dynamic Adaptive Streaming over Hypertext Transfer Protocol (HTTP) (DASH).
FIG. 2 is a signal flowchart illustrating a content processing method according to an embodiment of the present invention.
FIG. 3 illustrates categories of signaled information according to an embodiment of the present invention.
FIG. 4 illustrates a layer of a content division and levels of signaled information according to an embodiment of the present invention.
FIG. 5 is a diagram illustrating a structure of a terminal according to an embodiment of the present invention.

### Best Mode for Carrying Out the Invention

"Dynamic adaptive streaming over Hypertext Transfer Protocol (HTTP) (DASH) - Part 1: Media presentation description and segment formats/ Amd 2" of ISO/IEC DIS 23009-1 published on October 24, 2014, may be entirely cited as a reference for the present application and be referenced to describe the following embodiments.

Hereinafter, exemplary embodiments of the present invention will be described in detail with reference to the accompanying drawings. However, the present invention is not limited or restricted by the embodiments. Like reference numerals present in the drawings refer to the like elements throughout.

In the following description, "specify" may be used in the same meaning as "indicate" or "mean." The terms "Uniform Resource Locator (URL)" and "Uniform Resource Identifier (URI)" are used in the same meaning and may be replaced with each other.

When a particular element has an index of 1 to N or 0 to N, the element may be one or more elements. N may be an integer that is 0 or greater.

Illustrative terms used in the embodiments will be described as follows.
- Dynamic Adaptive Streaming over HTTP (DASH) may allow 1) media content to be delivered from a standard HTTP server to an HTTP client and 2) specify formats allowing caching of content by standard HTTP caches. The formats may include an XML format or a binary format.
- Media content may be a single media content period or a continuous sequence of media content periods. In the following description, media content, media and content may be collectively used in the same meaning. Media content may be a set of media content components having a common timeline, such as a video, audio and timed text. The medial components may have relationships regarding how the media components are presented, for example, whether the media components are presented individually, jointly or mutually exclusively, as a program or movie. Media content may be content on demand or live content.

Content may be divided into one or more intervals. That is, content may include one or more intervals. Hereinafter, an interval and a period may be used in the same meaning. In particular, a period may be a term used for third Generation Partnership Project (3GPP) Adaptive HTTP Streaming. A period may be an interval of a media presentation. A continuous sequence of all periods may form a media presentation.

One or more intervals may be a basic unit. One or more intervals may be described by signaling metadata. That is, metadata may describe each of one or more intervals. Metadata may be a Media Presentation Description (MPD), which will be described.
- A media content component may be a continuous component of media content having an assigned media component type. A media content component may be encoded into an individual media stream. A media component may be an encoded version of an individual media type, such as an audio, video or timed text, having a particular attribute, such as a bandwidth, language or resolution.
- A media stream may be an encoded version of a media content component.
- A media component type may be a single type of media content, such as an audio, video or text.
- A media presentation may be a collection of data establishing a bounded or unbounded presentation of media content. The media presentation may be a collection of data accessible by a DASH client so as to provide a user with a streaming service.
- A Media Presentation Description (MPD) may be a formalized description of a media presentation for providing a streaming service. An MPD may be a document including metadata required by a DASH client so as to configure an HTTP-URL suitable for access to a segment and to provide a user with a streaming service. A media presentation may include possible updates of an MPD and be described by the MPD.

An MPD may be a document including metadata required by a DASH client for configuring suitable HTTP-URLs so as to 1) access segments and 2) provide a user with a streaming service. HTTP-URLs may be absolute or relative. An MPD may be an XML document.

The MPD may define a format for indicating resource identifiers for segments. An MPD may provide context of identified resources in a media presentation. The resource identifiers may be HTTP-URLs. The URLs may be restricted by a byte range attribute.
- A period may be an interval of a media presentation. A continuous sequence of all periods may constitute a media presentation. That is, a media presentation may include one or more periods. Alternatively, a media presentation may include a sequence of one or more periods.
- A representation may be a collection and encapsulation of one or more media streams in delivery format and be associated with descriptive metadata. A representation may be a structured collection of one or more media content components in a single period. That is, a representation may be one of alternative choices of an entire set or subset of media content components constituting media content during a defined period. A representation may include one or more media streams.

A representation may start from a start point of a period (that is, a period including the representation) and continue to an end point of the period.

A representation may be one of alternative choices of media content or a subset of the media content with a different encoding choice, such as bitrate, resolution, language and codec.

An MPD (or MPD element) may provide descriptive information allowing a client to select one or more representations.

In the following description, a representation and a media representation may be used in the same meaning.

Sets of two or more segments corresponding to a single interval may be present and may be referred to as a representation or alternative.
- A segment may be a minimum accessible unit in an MPD having a defined format. In the following description, a segment and a media segment may be used in the same meaning.

Each interval may be divided into segments. In the following description, a segment and a fragment may be used in the same meaning. A segment may be a term of 3GPP Adaptive HTTP Streaming.

A segment may refer to an entity body of a response to an HTTP/1.1 GET request for an HTTP-URL (or a GET request for a portion indicated by a byte range) defined by, for example, RFC 2616.

A terminal may play media content using received bytes (that is, segments).
- A sub-segment may refer to a smallest unit of segments indexed by segment indices in a segment level.
- A sub-representation may be part of a representation described in a MPD present in an entire period.
- A Random Access Point (RAP) is a particular location in a media segment. An RAP is identified as a location at which playback may be started continuously from the location of the RAP using information included in the media segment only.

DASH may provide a media streaming model for delivery of media content. A client may exclusively control a session of the delivery. The client may request data from a standard web server having no DASH-specific functions using HTTP. Thus, the DASH standard may focus on a data format used to provide a DASH media presentation.

A collection of encoded and conveyable versions of media content and appropriate descriptions of the versions may form a media presentation. Media content may be formed of one or more media content periods continuing with time. Each media content period may be formed of one or more media content components. For example, audio components in different languages and a video content may be examples of one or more media content components. Each media content component may be assigned a media content type. An illustrative media content component type may be an audio or video.

Each media content component may have one or more encoded versions. An encoded version of a media content component may be referred to as a media stream. Each media stream may inherit attributes of media content used for encoding media content, a media content period or a media stream. Also, a media stream may be assigned attributes of an encoding process, such as sub-sampling, a codec parameter, encoding bitrate, or the like. Thus, metadata may be changed depending on a static or dynamic selection of media content components and media streams.

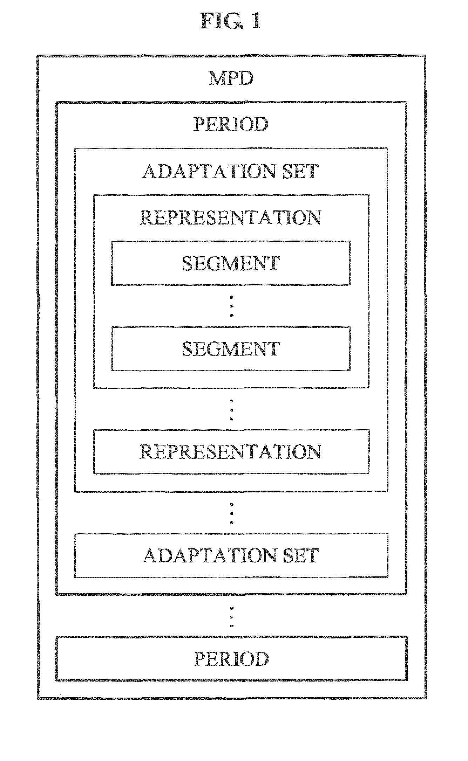

FIG. 1 illustrates a high-level data model of DASH.

As illustrated in FIG. 1, DASH may be based on a hierarchical data model.

A DASH media presentation may be described by an MPD document. An MPD may describe a sequence of periods with time. The sequence of the periods may form a media presentation. A period may generally represent a media content period during which a consistent set of encoded versions of media content is available. That is, during one period, bitrates, languages, captions and subtitles may not change.

A period may include one or more adaptation sets. An adaptation set may refer to a set of replaceable encoded versions of one or more media content components. For instance, one adaptation set may be present for a main video component, and one separate adaptation set may be present for a main audio component. That is, when there are different available materials, such as a caption and an audio description, the different available materials may have separate adaptation sets.

An adaptation set may include one or more representations. A representation may describe a conveyable encoded version of one or more media content components. A representation may include one or more media streams. A random single representation in an adaptation set may be sufficient to render included media content components. Generally, a client may switch from one representation to another representation so as to adapt to a network condition or other factors within one period. The client may ignore a representation dependent on a codec or other rendering techniques not supported by the client or inappropriate for other reasons.

Content may be divided into segments over time within a representation. That is, a representation may include one or more segments. A segment may be a basic unit of data indicated in an MPD. An URL of each segment may be provided. That the URL of the segment is provided may mean that the segment is a maximum unit of data which may be retrieved by a single HTTP request. Meanwhile, an MPD may include both a URL and a byte range of the URL. Thus, a segment may be included in a byte range of a different greater resource.

Relationships between elements constituting the data model are described as follows.
- An MPD may include a series of one or more periods.
- Each of the periods may include one or more adaptation sets. When an adaptation set includes one or more media content components, each media content component may be defined individually.
- Each adaptation set may include one or more representations.
- Each representation may include one or more sub-representations.
- Each representation may include one or more segments.
- A segment may include metadata for accessing, decoding and presenting media content including media data and/or a segment.
- An adaptation set, a representation and a sub-representation may share common attributes and elements.
- Each segment may include one or more sub-segments.

An MPD document illustrating an MPD may include an MPD element.

Table 1 may illustrate an XML schema of an MPD according to an example.

**[Table 1]**

| |
|---|
| ```
<?xml version="1.0" encoding="UTF-8"?>
<xs:schema targetNamespace="urn:mpeg:DASH:schema:MPD:2011"
  attributeFormDefault="unqualified"
  elementFormDefault="qualified"
  xmlns:xs="http://www.w3.org/2001/XMLSchema"
  xmlns:xlink="http://www.w3.org/1999/xlink"
  xmlns="urn:rnpeg:DASHachema:MPD:2011 ">
  <xs:import namespace="http://www.w3.org/1999/xlink"
    schemaLocation="http://www.w3.org/1999/xlink.xsd"/>
  <xs:annotation>
    <xs:appinfo>Media Presentation Description</xs:appinfo>
    <xs:documentation xml:lang="en">
      This Schema defines the Media Presentation Description for MPEG-DASH.
    </xs:documentation>
  </xs:annotation>
  <!-- MPD: main element -->
  <xs:element name="MPD" type="MPDtype"/>
  ....
 </xs:schema>
``` |

Table 1 may illustrate initial part of the XML schema of the MPD. The initial part may include a namespace and other definitions.

A mechanism for referencing remote elements from a local MPD may be defined. A subset of a W3C XLINK simple link having 1) limited syntax and semantics and 2) a processing model may be defined.

XLINK attributes used as part of ISO/IEC 23009 may be as follows.
- An xlink:type attribute may define a type of used W3C XLINK.
- An xlink:href attribute may identify a remote element using a URI, as defined by IETF RFC 3986.
- An xlink:show attribute may define a desired behavior once a remote element is dereferenced in the MPD, as defined by W3C XLINK.
- An xlink:actuate attribute may define desired timing of dereferencing a remote object in the MPD, as defined by W3C XLINK.

Table 2 may illustrate an XML schema of XLINK according to an example.

**[Table 2]**

| |
|---|
| ```
 <?xml version='1.0' encoding='UTF-8'?>
 <xs:schema xmlns:xs="'http://www.w3.org/2001/XMLSchema"
    targetNamespace="http://www.w3.org/1999/xlink"
    xmlns:xlink="http://www.w3.org/1999/xlink">
    <xs:attribute name="type" type="xs:token" fixed="simple"/>
    <xs:attribute name="href" type="xlink:hrefType"/>
    <xsaimpleType name="hrefType">
         <xs:restriction base="xs:anyURI"/>
    </xs: simpleType>
    <xs:attribute name="show" type="xs:token" fixed="embed"/>
    <xs:attribute name="actuate" type="xlink:actuateType" default="onRequest"/>
    <xsaimpleType name="actuateType">
        <xs:restriction base="xs:token">
             <xs:enumeration value="onLoad"/>
             <xs:enumeration value="onRequest"/>
        </xs:restriction>
   </xs: simpleType>
   </xsachema>
``` |

In the schema, a namespace, title, type and default value of each element or each attribute may be described. Also, hierarchical relationships between elements and attributes may be described.

Rules for dealing with URI reference in the xlink:href attribute may be as follows.
- URI reference to a remote element which may not be resolved may be treated as invalid reference and invalidate the MPD.
- URI reference to a remote element that is an inappropriate target with respect to given reference may be treated as invalid reference and invalidate the MPD.
- URI reference directly or indirectly referencing themselves may be treated as invalid circular reference and invalidate the MPD.
- Random reference to a remote element may be an HTTP-URL.
- When URI reference is relative, a reference resolution may be applied.

Semantics of the MPD element is described as follows.
1) The MPD element may have the following attributes.
   - An id attribute may specify an identifier of a media presentation. The id attribute may be a unique identifier within a range of a published media presentation.
   - A type attribute may specify whether the MPD may be updated.
   - A mediaPresentationDuration attribute may specify duration of an entire media presentation. If the mediaPresentationDuration attribute is absent, the duration of the media presentation may be unknown.
   - A maxSegmentDuration attribute may specify maximum duration of a random segment in a random representation in a media presentation.
2) The MPD element may have the following elements.
   - A ProgramInformation element may have an index of 0 to N and specify descriptive information on a program. A ProgramInformation element having an index of N may indicate that number of instances of the element may be up to unlimited. A ProgramInformation element having an index of 0 may indicate that the element is optional. A ProgramInformation element having an index of at least 1 may indicate that the element is mandatory. That is, an index range may indicate occurrence numbers or cardinality.
   - A BaseURL element may have an index of 0 to N and specify a base URL available for selection of a reference resolution and an alternative URL.
   - A Location element may have an index of 0 to N and specify a location at which the MPD is available.
   - A Period element may have an index of 1 to N and specify information on a period.
   - A Metrics element may have an index of 0 to N and specify DASH Metrics.

Table 3 may illustrate XML syntax of the MPD element according to an example.

**[Table 3]**

| |
|---|
| ```
 <!-- MPD Type -->
 <xs:complexType name="MPDtype">
  <xs:sequence>
    <xs:element name="ProgramInformation" type="ProgramInformationType"
    minOccurs="0" maxOccurs="unbounded"/>
    <xs:element name="BaseURL" type="BaseURLType" minOccurs="0"
    maxOccurs="unbounded"/>
    <xs:element name="Location" type="xs:anyURI" minOccurs="0"
    maxOccurs="unbounded"/>
    <xs:element name="Period" type="PeriodType" maxOccurs="unbounded"/>
    <xs:element name="Metrics" type="MetricsType" minOccurs="0"
    maxOccurs="unbounded"/>
    <xs:any namespace="##other" processContents="lax" minOccurs="0"
    maxOccurs="unbounded"/>
  </xs:sequence>
 <xs:attribute name="id" type="xs:string"/>
 <xs:attribute name="profiles" type="xs:string"/>
 <xs:attribute name="type" type="PresentationType" default="static"/>
 <xs:attribute name="availabilityStartTime" type="xs:dateTime"/>
 <xs:attribute name="availabilityEndTime" type="xs:dateTime"/>
 <xs:attribute name="mediaPresentationDuration" type="xs:duration"/>
 <xs:attribute name="minimumUpdatePeriod" type="xs:duration"/>
 <xs:attribute name="minBufferTime" type="xs:duration" use="required"/>
 <xs:attribute name="timeShiftBufferDepth" type="xs:duration"/>
 <xs:attribute name="suggestedPresentationDelay" type="xs:duration"/>
 <xs:attribute name="maxSegmentDuration" type="xs:duration"/>
 <xs:attribute name="maxSubsegmentDuration" type="xs:duration"/>
 <xs:anyAttribute namespace="##other" processContents="lax"/>
 </xs:complexType>
 <!-- Presentation Type enumeration -->
 <xs:simpleT3,pe name="PresentationType">
 <xs:restriction base="xs:string">
    <xs:enumeration value="static"/>
    <xs:enumeration value="dynamic"/>
    </xs:restriction>
``` |

A media presentation may include one or more periods. A period may be defined by the Period element in the MDP element.

Periods may be divided into a regular period and an early available period. A PeriodStart time of the regular period may be defined as follows.
- When the Period element includes a start attribute, a period may be a regular period and a PeriodStart time may have the same value as the start attribute.
- When the Period element includes no start attribute and a previous Period element includes a duration attribute, a period may be a regular period. A PeriodStart time of the period may be a sum of a start time of a previous period and a value of a duration attribute of the previous period.
- When 1) the start attribute is absent, 2) the Period element is the first in the MDP, and 3) the type attribute of the MPD is static, the PeriodStart time may be 0.
- When 1) the start attribute is absent and 2) the previous Period element includes no duration attribute or the Period element is the first in the MPD, and 3) the type attribute of the MPD is dynamic, the period may be an early available period.

Semantics of the Period element is described as follows.
1) The Period element may have the following attributes.
   - An xlink:href attribute may specify reference to an external Period element.
   - An xlink:actuate attribute may specify processing instructions. The link: actuate attribute may have a value of "onload" or "onRequest."
   - An id attribute may specify an identifier of the period. The id attribute may be a unique identifier within a range of a media presentation.
   - A start attribute may specify a PeriodStart time of the period. The PeriodStart time may be used as an anchor for determining an MPD start time of each media segment and be used for determining a presentation time of each access unit in a media presentation timeline.
   - A duration attribute may specify duration of the period for determining a PeriodStart time of a next period.
2) The Period element may have the following elements.
   - A BaseURL element may have an index of 0 to N and be used for selection of a reference resolution and an alternative URL.
   - An AdaptationSet element may have an index of 1 to N and specify information on an adaptation set.
   - A Subset element may have an index of 0 t N and specify a subset.

Table 4 may illustrate XML syntax of the Period element according to an example.

**[Table 4]**

| |
|---|
| ```
 <!-- Period -->
 <xs:complexType name="PeriodType">
  <xs:sequence>
    <xs:element name="BaseURL" type="BaseURLType" minOccurs="0"
    maxOccurs="unbounded"/>
    <xs:element name="SegmentBase" type="SegmentBaseType" minOccurs="0"/>
    <xs:element name="SegmentList" type="SegmentListType" minOccurs="0"/>
    <xs:element name="SegmentTemplate" type="SegmentTemplateType"
    minOccurs="0"/>
    <xs:element name="AdaptationSet" type="AdaptationSetType" minOccurs="0"
    maxOccurs="unbounded"/>
    <xs:element name="Subset" type="SubsetType" minOccurs="0"
    maxOccurs="unbounded"/>
 <xs:any namespace="##other" processContents="lax" minOccurs="0"
 maxOccurs="unbounded"/>
 </xs:sequence>
 <xs:attribute ref="xlink:href'/>
 <xs:attribute ref="xlink:actuate" default="onRequest"/>
 <xs:attribute name="id" type="xs:string" />
 <xs:attribute name="start" type="xs:duration"/>
 <xs:attribute name="duration" type="xs:duration"/>
 <xs:attribute name="bitstreamSwitching" type="xs:boolean" default="false"/>
 <xs:anyAttribute namespace="##other" processContents="lax"/>
 </xs:complexType>
``` |

Each period may include one or more adaptation sets. An adaptation set may be described by the AdaptationSet element include in the Period element.

An adaptation set may include alternative encodings of one or more media components. Each alternative encoding may be included in a representation. One or more representations included in a single adaptation set may represent the same media content component and include one or more media streams considered to be perceptually the same.

One or more representations may be arranged in an adaptation set according to properties of a media content component presented in the one or more representations. The properties of the media content component may include 1) a language described by an lang attribute, 2) a media content type described by a contentType attribute, 3) a picture aspect ratio described by a par attribute, 4) a role property described by a Role element, 5) an accessibility property described by an Accessibility element, 6) a viewpoint property described by a ViewPoint element and 7) a rating property described by a Rating element.

The AdaptationSet element may include default values of elements and attributes associated with the one or more representations included in the adaptation set. A list of present elements and attributes commonly possible for the AdaptationSet element and a Representation element is described as follows.

The Adaptation element may support descriptions of ranges of a bandwidth attribute, a width attribute, a height attribute and a frame rate attribute associated with the one or more representations included in the adaptation set. The descriptions may provide a summary of all values of all the one or more presentations included in the adaptation set. The one or more presentations included in the adaptation set may not have values out of a range defined in the adaptation set.

The adaptation set may be divided into groups by using a group attribute.

Semantics of the AdaptationSet element is described as follows.
1) The AdaptationSet element may have the following attributes.
   - An xlink:href attribute may specify reference to an external AdaptationSet element.
   - An xlink:actuate attribute may specify processing instructions. The link:actuate may have a value of "onload" or "onRequest."
   - An id attribute may specify an identifier of the adaptation set in a range of a period. The id attribute may be a unique identifier within a range including the period. The id attribute may be absent in a remote element.
   - A group attribute may be a unique identifier of a group within the range of the period.
   - A lang attribute may declare language code(s) of the adaptation set. Syntax and semantics in accordance with IETF RFC 5646 may be used.
   - A contentType attribute may specify a media content component type of the adaptation set. A value of a highest-level content type "type" may be defined by RFC1521.
   - A par attribute may specify a picture aspect ratio. The par attribute may include two integers. When the par attribute is present, width and height attributes of the representations may also be present.
   - A minBandWidth attribute may specify a minimum bandwidth attribute value of all representations in the adaptation set.
   - A maxBandWidth attribute may specify a maximum bandwidth attribute value of all representations in the adaptation set.
   - A minWidth attribute may specify a minimum width attribute value of all representations in the adaptation set.
   - A maxWidth attribute may specify a maximum width attribute value of all representations in the adaptation set.
   - A minHeight attribute may specify a minimum height attribute value of all representations in the adaptation set.
   - A maxHeight attribute may specify a maximum height attribute value of all representations in the adaptation set.
   - A minFrameRate attribute may specify a minimum frame rate attribute value of all representations in the adaptation set.
   - A maxFrameRate attribute may specify a maximum frame rate attribute value of all representations in the adaptation set.
2) The AdaptationSet element may have the following elements.
   - An Accessibility element may have an index of 0 to N and specify information on an accessibility scheme.
   - A Role element may have an index of 0 to N and specify information on a role annotation scheme.
   - A Rating element may have an index of 0 to N and specify information on a rating scheme.
   - A Viewpoint element may have an index of 0 to N and specify information on a viewpoint annotation scheme.
   - A ContentComponent element may have an index of 0 to N and specify properties of a media content component included in the adaptation set.
   - A BaseURL element may have an index of 0 to N and be used for selection of a reference resolution and an alternative URL.
   - A Representation element may have an index of 0 to N and specify a representation. Each adaptation set may include at least one representation element. A representation element may be part of a remote element.

Table 5 may illustrate XML syntax of the AdaptationSet element according to an example.

**[Table 5]**

| |
|---|
| ```
 <!-- Adaptation Set -->
 <xs:complexType name="AdaptationSetType">
  <xs:complexContent>
    <xs:extension base="RepresentationBaseType">
       <xs:sequence>
         <xs:element name="Accessibility" type="DescriptorType" minOccurs="0"
         maxOccurs="unbounded"/>
         <xs:element name="Role" type="DescriptorType" minOccurs="0"
         maxOccurs="unbounded"/>
         <xs:element name="Rating" type="DescriptorType" minOccurs="0"
         maxOccurs="unbounded"/>
         <xs:element name="Viewpoint" type="DescriptorType" minOccurs="0"
         maxOccurs="unbounded"/>
         <xs:element name="ContentComponent" type="ContentComponentType"
         minOccurs="0" maxOccurs="unbounded"/>
         <xs:element name="BaseURL" type="BaseURLType" minOccurs="0"
         maxOccurs="unbounded"/>
         <xs:element name="SegmentBase" type="SegmentBaseType"
         minOccurs="0"/>
         <xs:element name="SegmentList" type="SegmentListType"
         minOccurs="0"/>
         <xs:element name="SegmentTemplate" type="SegmentTemplateType"
         minOccurs="0"/>
         <xs:element name="Representation" type="RepresentationType"
         minOccurs="0" maacOccurs="unbounded"/>
         </xs:sequence>
      <xs:attribute ref="xlink:href"/>
      <xs:attribute ref="xlink:actuate" default="onRequest"/>
      <xs:attribute name="id" type="xs:unsignedInt"/>
      <xs:attribute name="group" type="xs:unsignedInt"/>
      <xs:attribute name="lang" type="xs:language"/>
      <xs:attribute name="contentType" type="xs:string"/>
      <xs:attribute name="par" type="xs:string"/>
      <xs:attribute name="minBandwidth" type="xs:unsignedInt"/>
      <xs:attribute name="maxBandwidth" type="xs:unsignedInt"/>
      <xs:attribute name="minWidth" type="xs:unsignedInt"/>
      <xs:attribute name="maxWidth" type="xs:unsignedInt"/>
      <xs:attribute name="minHeight" type="xs:unsignedInt"/>
      <xs:attribute name="maxHeight" type="xs:unsignedInt"/>
      <xs:attribute name="minFrameRate" type="xs:string"/>
      <xs:attribute name="maxFrameRate" type="xs:string"/>
      <xs:attribute name="segmentAlignment" type="ConditionalUintType"
      default="false"/>
      <xs:attribute name="subsegmentAlignment" type="ConditionalUintType"
      default="false"/>
      <xs:attribute name="subsegmentStartsWithSAP" type="SAPType"
      default="0"/>
      <xs:attribute name="bitstreamSwitching" type="xs:boolean"/>
    </xs:extension>
 </xs:complexContent>
 </xs:complexType>
 <!-- Conditional Unsigned Integer (unsignedInt or boolean) -->
 <xsaimpleType name="ConditionalUintType">
 <xs:union memberTypes="xs:unsignedInt xs:boolean"/>
 </xs:simpleType>
``` |

The adaptation set may include one or more media content components. Properties of each media content component may be described by a ContentComponent element. When the adaptation set includes a single media content component, properties of the media content component may be described directly by the AdaptationSet element.

Semantics of the ContentComponent element is described as follows.
1) The ContentComponent element may have the following attributes.
   - An id attribute may specify an identifier of a media component. The id attribute may be unique in a range of the adaptation set.
   - A lang attribute may declare language code(s) of a media content component. Syntax and semantics in accordance with IETF RFC 5646 may be used.
   - A contentType attribute may specify a type of a media content component. A value of a highest-level content type "type" may be defined by RFC 1521.
   - A par attribute may specify a picture aspect ratio. The par attribute may include two integers. When the par attribute is present, width and height attributes of the representations may also be present.
2) The ContentComponent element may have the following elements.
   - An Accessibility element may have an index of 0 to N and specify information on an accessibility scheme.
   - A Role element may have an index of 0 to N and specify information on a role annotation scheme.
   - A Rating element may have an index of 0 to N and specify information on a rating scheme.
   - A Viewpoint element may have an index of 0 to N and specify information on a viewpoint annotation scheme.

Table 6 may illustrate XML syntax of the ContentComponent element according to an example.

**[Table 6]**

| |
|---|
| ```
<!-- Content Component -->
 <xs:complexType name="ContentComponentType">
  <xs:sequence>
    <xs:element name="Accessibility" type="DescriptorType" minOccurs="0"
    maxOccurs="unbounded"/>
   <xs:element name="Role" type="DescriptorType" minOccurs="0"
   maxOccurs="unbounded"/>
    <xs:element name="Rating" type="DescriptorType" minOccurs="0"
    maxOccurs="unbounded"/>
   <xs:element name="Viewpoint" type="DescriptorType" minOccurs="0"
   maxOccurs="unbounded"/>
   <xs:any namespace="##other" processContents="lax" minOccurs="0"
   maxOccurs="unbounded"/>
 </xs:sequence>
 <xs:attribute name="id" type="xs:unsignedInt"/>
 <xs:attribute name="lang" type="xs:language"/>
 <xs:attribute name="contentType" type="xsatring"/>
 <xs:attribute name="par" type="xs:string"/>
 <xs:anyAttribute namespace="##other" processContents="lax"/>
 </xs:complexType>
``` |

A representation may be described by the Representation element. The AdaptationSet element may include one or more Representation elements.

A representation may be one of alternative choices of an entire set or subset of media content components constituting media content in a defined period.

A representation may start from a start PeriodStart of a period and continue to an end of the period. The end of the period may be a start of a next period or an end of a media presentation.

Each representation may include one or more media streams. Each media stream may be an encoded version of a media content component.

A representation may include one or more segments.

Semantics of the Representation element is described as follows.
1) The Representation element may have the following attributes.
   - An id attribute may specify an identifier of a representation. The id attribute may be unique in a range of a period when the representation is not functionally the same as another representation in the same period. The id attribute may not include a whitespace character.
   - A bandwidth attribute may specify data rate of a representation and a boundary of data rate variation.
   - A qualityRanking attribute may specify relative quality ranking of a representation to other representations in the same adaptation set.
   - A dependencyID attribute may specify all dependent complementary representations in decoding and/or presentation processes. The dependencyID attribute may be a whitespace-separated list of values of id attributes.
2) The Representation element may have the following elements.
   - A BaseURL element may have an index of 0 to N and be used for selection of a reference resolution and an alternative URL.
   - A SubRepresentation element may have an index of 0 to N and specify information on a sub-representation embedded in a representation. The SubRepresentation element may be used for selection of a reference resolution and an alternative URL.

Table 7 may illustrate XML syntax of the Representation element according to an example.

**[Table 7]**

| |
|---|
| ```
 <!-- Representation -->
 <xs:complexType name="RepresentationType">
  <xs:complexContent>
    <xs:extension base="RepresentationBaseType">
      <xs:sequence>
         <xs:element name="BaseURL" type="BaseURLType" minOccurs="0"
         maxOccurs="unbounded"/>
         <xs:element name="SubRepresentation" type="SubRepresentationType"
         minOccurs="0" maxOccurs="unbounded"/>
         <xs:element name="SegmentBase" type="SegmentBaseType"
         minOccurs="0"/>
         <xs:element name="SegmentList" type="SegmentListType"
         minOccurs="0"/>
 <xs:element name="SegmentTemplate" type="SegmentTemplateType"
 minOccurs="0"/>
      </xs:sequence>
      <xs:attribute name="id" type="xs:string" use="required"/>
      <xs:attribute name="bandwidth" type="xs:unsignedInt" use="required"/>
      <xs:attribute name="qualityRanking" type="xs:unsignedInt"/>
      <xs:attribute name="dependencyId" type="StringVectorType"/>
      <xs:attribute name="mediaStreamStructureId" type="StringVectorType"/>
    </xs:extension>
 </xs:complexContent>
 </xs:complexType>
 <!-- Whitespace-separated list of strings -->
 <xs:simpleType name="StringVectorType">
 <xs:list itemType="xs:string"/>
 </xs:simpleType>
``` |

A sub-representation may be embedded in a regular representation and be described by the SubRepresentation element. The Representation element may include the SubRepresentation element. The SubRepresentation element may describe properties of one or more media content components embedded in a representation. A representation and a sub-representation may share common attributes and elements.

Semantics of the SubRepresentation element is described as follows.

The SubRepresentation element may have the following attributes.
- A level attribute may specify a level of a sub-representation.
- A dependency attribute may specify a set of sub-representations in a representation on which the sub-representations are dependent in decoding and presentation processes as a whitespace-separated list of values of level attributes.
- A bandwidth attribute is the same as a bandwidth attribute of a representation but may be applied to a sub-representation.
- A contentComponet attribute may specify a set of all media content components included in a sub-representation as a whitespace-separated list of values of id attributes of the ContentComponent element.

Table 8 may illustrate XML syntax of the SubRepresentation element according to an example.

**[Table 8]**

| |
|---|
| ```
 <!-- SubRepresentation -->
 <xs:complexType name="SubRepresentationType">
  <xs:complexContent>
    <xs: extension base="RepresentationBaseType">
      <xs:attribute name="level" type="xs:unsignedInt"/>
      <xs:attribute name="dependencyLevel" type="UIntVectorType"/>
      <xs:attribute name="bandwidth" type="xs:unsignedInt"/>
      <xs:attribute name="contentComponent" type="StringVectorType"/>
    </xs:extension>
  </xs:complexContent>
  </xs:complexType>
  <!-- Whitespace-separated list of unsigned integers -->
  <xsaimpleType name="UIntVectorType">
  <xs:list itemType="xs:unsignedInt"/>
  </xs:simplelype>
``` |

Common attributes and elements of the AdaptationSet element, the Representation element and the SubRepresentation element are described as follows.
1) The AdaptationSet element, the Representation element and the SubRepresentation element may have the following common attributes.
   - A profile attribute may specify a profile of associated representation(s) following media presentation profiles. A value of the profile attribute may be a subset of values of random high levels of a document layer (representation, adaptation set and MPD). When the profile attribute is absent, the value of the profile attribute may be considered to be the same as a value of a next high level of the document layer. For instance, when a profile attribute of a representation is absent, a profile attribute of an adaptation set may be valid for the representation.
   - A width attribute may specify horizontal visual presentation size of a video media type on a grid determined by a sar attribute. When the sar attribute is absent, width and height may be specified so that the sar attribute has a value of "1:1."
   - A height attribute may specify vertical visual presentation size of the video media type on the grid determined by the sar attribute.
   - A sar attribute may specify a sample length ratio of a video media component type. The sar attribute may have a format of a string including two integers separated by ":". A first integer may specify horizontal size based on a random unit of encoded video pixels. A second integer may specify vertical size based on a random unit of encoded video pixels.
   - A frameRate attribute may specify output frame rate of a video media type in a representation. If a frame or frame rate changes, the frameRate attribute may have a value which is half of a value of an average frame or average frame rate throughout entire duration of the representation.
   - An audioSampleRate attribute may be a decimal integer value specifying sampling rate of an audio media component type, which may be a pair of whitespace-separated decimal integer values respectively representing minimum sampling rate and maximum sampling rate of the audio media component type. The audioSamplingRate attribute may have a value of samples per second.
   - A mimeType attribute may specify an MIME type of a concatenation of initialization segments.
   - A codecs attribute may specify codices present in a representation.
2) The AdaptationSet element, the Representation element and the SubRepresentation element may have the following common elements.
   - A FramePacking element may have an index of 0 to N and specify framepacking arrangement information on a video media component type.
   - An AudioChannelConfiguration element may have an index of 0 to N and specify an audio channel configuration of an audio media component type.
   - A ContentProtection element may have an index of 0 to N and specify information on content protection schemes used for an associated representation.

Table 9 may illustrate common XML syntax of the AdaptationSet element, Representation element and SubRepresentation element according to an example.

**[Table 9]**

| |
|---|
| ```
 <!-- Representation base (common attributes and elements) -->
 <xs:complexType name="RepresentationBaseType">
  <xs:sequence>
    <xs:element name="FramePacking" type="DescriptorType" minOccurs="0"
    maxOccurs="unbounded"/>
    <xs:element name="AudioChannelConfiguration" type="DescriptorType"
    minOccurs="0" maxOccurs="unbounded"/>
    <xs:element name="ContentProtection" type="DescriptorType" minOccurs="0"
    maxOccurs="unbounded"/>
    <xs:any namespace="##other" processContents="lax" minOccurs="0"
    maxOccurs="unbounded"/>
  </xs:sequence>
  <xs:attribute name="profiles" type="xs:string"/>
  <xs:attribute name="width" type="xs:unsignedInt"/>
  <xs:attribute name="height" type="xs:unsignedInt"/>
  <xs:attribute name="sar" type="xs:string"/>
  <xs:attribute name="frameRate" type="xsatring"/>
  <xs:attribute name="audioSamplingRate" type="xs:string"/>
  <xs:attribute name="mimeType" type="xs:string"/>
  <xs:attribute name="segmentProfiles" type="xsatring"/>
  <xs:attribute name="codecs" type="xsatring"/>
  <xs:attribute name="maximumSAPPeriod" type="xs:double"/>
  <xs:attribute name="startWithSAP" type="SAPType"/>
  <xs:attribute name="maxPlayoutRate" type="xs:double"/>
  <xs:attribute name="codingDependency" type="xs:boolean"/>
  <xs:attribute name="scanType" type="VideoScanType"/>
  <xs:anyAttribute namespace="##other" processContents="lax"/>
  </xs:complexType>
  <!-- Stream Access Point type enumeration -->
  <xsaimpleType name="SAPType">
  <xs:restriction base="xs:unsignedInt">
    <xs:minInclusive value="0"/>
    <xs:maxlnclusive value="6"/>
 </xs:restriction>
 </xs:simpleType>
 <!-- Video Scan type enumeration -->
 <xs:simpleType name="VideoScanType">
 <xs:restriction base="xs:string">
    <xs:enumeration value="progressive"/>
    <xs:enumeration value="interlaced"/>
    <xs:enumeration value=" unknow-n"/>
 </xs:restriction>
 </xs:simpleType>
``` |

A segment may be a minimum addressable unit which has a defined format and is described by the MPD.

A segment may be referenced by an HTTP-URL included in the MPD. Here, the HTTP-URL may be defined as <absolute-URI> in accordance with RFC 3986. The HTTP-URL may have a fixed scheme of "http://" or "https://" and be limited by a byte range when a range attribute is provided in the URL. The byte range may be expressed as byte-range-spec defined by RFC 2616. The byte range may be limited by a single expression identifying a continuous range of bytes.

A representation may be assigned segment information through presence of a BaseURL element, a SegmentBase element, a SegmentTemplate element and/or a SegmentList element. The segment information may provide information on locations, availability and properties of all of one or more segments included in the representation. In particular, initializations, media, indices and presence and locations of bitstream switching segments may be provided.

The SegmentBase element, the SegmentTemplate element and the SegmentList element may be present in the Representation element. Further, the SegmentBase element, the SegmentTemplate element and the SegmentList element may be present in the Period element or the AdaptationSet element so as to indicate default values. If the SegmentTemplate element or the SegmentList element is present in one level of a layer, a media component may not be presented in a lower level of the layer. The SegmentBase element, the SegmentTemplate element and the SegmentList element may inherit attributes and elements of the corresponding elements in a higher level. When the two levels include the same attributes or elements, the attributes or elements in the lower level may have precedence over the attributes or elements in the higher level.

The SegmentBase element may include sufficient information when a single media segment is provided per representation and the BaseURL element includes a media segment URL. When multiple media segments are present, the SegmentList element or SegmentTemplate element sharing multiple segments base information may be used.

When a representation includes one or more media segments, a duration attribute or a SegmentTimeLine element may be present.

A segment list may be defined by one or more SegmentList elements. Each SegmentList element may include a list of SegmentURL elements with respect to a list of concatenated segment URLs. Each segment URL may include a media segment URL and a byte range. A Segment URL element may include an index segment.

A segment template may be defined by the SegmentTemplate element. To generate a list of segments, specific identifiers substituted by dynamic values may be assigned to the segments.

The segment information may provide the following information.
- Initializations, indices and presence or absence of bitstream switching segment information.
- HTTP-URL and byte range of each accessible segment in each representation.
- All valid segment URLs declared in MPD.
- Segment availability start time and segment availability end time of each period with respect to services having a MPD type attribute of "dynamic".
- Approximate media presentation start time of each media segment in a media presentation timeline within a period.

A segment element or subordinate elements of the segment element may have the following attributes.
- A duration element may indicate constant approximate segment duration. All segments in the Representation element may have the same duration. Here, a last segment in the period may have different duration.
- A sourceURL attribute may specify part of a source URL. sourceURL may have a format of <absolute-URI> in accordance with RFC 3986. sourceURL may have a fixed scheme of <relative-ref> in accordance with "http://," "https://" or RFC 3986. If the sourceURL attribute is absent, a random BaseURL element may be mapped onto the sourceURL attribute. Also, when the sourceURL attribute is absent, a range attribute may be provided.
- A range attribute may specify restriction of a byte range of an HTTP-URL. The byte range may be expressed and formatted according to byte-range-spec defined by RFC 2616. If the range attribute is absent, the element may refer to all resources referenced in the sourceURL attribute.

Table 10 may illustrate XML syntax of the segment information according to an example.

**[Table 10]**

| |
|---|
| ```
 <!-- Segment information base -->
 <xs:complexType name="SegmentBaseType">
 <xs:sequence>
     <xs:element name="Initialisation" type="URLType" minOccurs="0"/>
     <xs:element name="RepresentationIndex" type="URLType" minOccurs="0"/>
    <xs:any namespace="##other" processContents="Iax" minOccurs="0"
    maxOccurs="unbounded"/>
 </xs:sequence>
   <xs:attribute name="timescale" type="xs:unsignedInt"/>
   <xs:attribute name="presentationTimeOffset" type="xs:unsignedInt"/>
   <xs:attribute name="indexRange" type="xs:string"/>
   <xs:attribute name="indexRangeExact" type="xs:boolean"/>
 <xs:anyAttribute namespace="##other" processContents="lax"/>
 </xs:complexType>
 <!-- Multiple Segment information base -->
 <xs:complexType name="MultipleSegmentBaseType">
 <xs: complexContent>
    <xs: extension base="SegmentBaseType">
       <xs:sequence>
         <xs:element name="SegmentTimeline" type="SegmentTimelineType"
         minOccurs="0"/>
         <xs:element name="BitstreamSwitching" type="URLType" minOccurs="0"/>
       </xs:sequence>
       <xs:attribute name="duration" type="xs:unsignedInt"/>
       <xs:attribute name="startNumber" type="xs:unsignedInt"/>
    </xs:extension>
  </xs:complexContent>
  </xs: complexType>
  <!-- Segment Info item URL/range -->
  <xs:complexType name="URLType">
  <xs:sequence>
    <xs:any namespace="##other" processContents="lax" minOccurs="0"
    maxOccurs="unbounded"/>
  </xs:sequence>
  <xs:attribute name="sourceURL" type="xs:anyURI"/>
  <xs:attribute name="range" type="xs:string"/>
  <xs:anyAttribute namespace="##other" processContents="lax"/>
  </xs:complexType> <xs:enumeration value="progressive"/>
    <xs:enumeration value="interlaced"/>
    <xs:enumeration value="unknown"/>
  </xs:restriction>
  </xs:simpleType>
``` |

An additional configuration for selecting a representation based on characteristics of users and terminals is described as follows.

According to the foregoing solution for DASH, representations may be described by various metadata. Characteristics of the representations may be mostly for selecting representations based on characteristics of terminals. For instance, the characteristics of the terminals may include resolution and a connection bandwidth.

An accessibility characteristic of a representation may be used to support disabled users having difficulties in perceiving multimedia content. The following embodiment for supporting accessibility may include 1) MPEG-21 Digital Item Adaptation (DIA) accessibility descriptions and 2) a plurality of hints for facilitating enhancement/replacement of content components. Essentially, the MPEG-21 DIA accessibility descriptions including VisualImpairmentType and/or AuditoryImpairmentType elements of ISO/IEC 21000-7 facilitate descriptions of various symptoms of visual or auditory impairments of users. The visual or auditory impairments of the users may include color deficiency or low vision.

The following rules may be applied to a URI so as to identify particular accessibility schemes. For example, the schemes may be included in the foregoing Accessibility element.

A URI for representations including video and/or audio content may be defined as in Table 11.

**[Table 11]**

| |
|---|
| ```
urn:mpeg:mpegB;dash:dash:mp21 accessibility:<value>
``` |

The URI may refer to accessibility schemes based on an accessibility definition of ISO/IEC 21000-7.

If <value> is "s0," an appropriate representation is prepared in advance and associated accessibility may be described by the Accessibility element. To convey the description, different modes may be used. For instance, an accessibility description may be conveyed by an MP21Access element and be referenced by an xlink:href attribute defined as follows.

If <value> is "s1," a provider may acquire an accessibility description for a disabled user in any manner and provide appropriate content for the disabled user.

As for context of DASH, if a representation is associated with accessibility information, the representation may be used for a disabled user having specific symptoms described by an accessibility description. Generally, media of the representation may be improved so as to cope with a problem of the disabled user. Here, improvement in the representation may be adjustment of contrast or color.

The Accessibility element may be extended as follows. A new child element "MP21Access" may be used as a container for an MPEG-21 DIA accessibility description. Also, an additional xlink:href attribute may be added to the Accessibility element so as to refer to an external description including MPEG-21 DIA accessibility elements.

Moreover, a new attribute "use" may be employed as a hint for a client to indicate intended use of a representation for purpose of accessibility. The new element and the new attribute may be applied to a representation group (or adaptation set), a representation and a sub-representation.

Semantics of elements and attributes for supporting accessibility is described as follows.
1) A Group element, the AdaptationSet element, the Representation element or the SubRepresentation element may further include the following attributes to support accessibility.
   - A use attribute may indicate intended use of representation(s). The use attribute may have a value of signLang, subtitle, caption, description or plusDes. signLang may indicate that a representation is used as a sign language. Subtitle may indicate that a representation is used as a subtitle. Caption may indicate that a representation is used as a caption. A caption may be a subtitle having an additional description. Description may indicate that a representation is used as a description, for example, an audio description of a movie. PlusDesc may indicate that content of a representation is improved by including a description, for example, refer to a sound track improved by including an audio description.
   - An xlink:href attribute may provide reference to external MPEG-21 DIA including AuditoryImpairmentType and/or VisualImpairmentType elements of ISO/IEC IS 21000-7. The representation or representation group associated with the foregoing description may be appropriate for disabled users having problems described by the description.
   - An xlink:actuate may specify processing instructions. The processing instructions may be "onLoad" or "onRequest." The xlink:actuate attribute may be absent in the absence of the xlink:href attribute.
2) The Group element, the AdaptationSet element, the Representation element or the SubRepresentation element may further include the following elements to support accessibility.
   - An Accessibility element may have an index of 0 to N and provide information on an accessibility information scheme.
   - An MP21Access element may have an index of 0 to 1 and include an MPEG-21 DIA description together with AuditoryImpairmentType and/or VisualImpairmentType elements of ISO/IEC 21000-7. Representations or a representation group associated with the foregoing description may be appropriate for disabled users having problems described by the description.

Table 12 may illustrate XML syntax of each of elements for supporting accessibilities of the Group element, the AdaptationSet element, the Representation element and the SubRepresentation element according to an example.

**[Table 12]**

| |
|---|
| ```
 <!-- RepresentationBase type; extended by other Representation-related types -->
 <xs:complexType name="RepresentationBaseType">
 <xs:sequence>
    <xs:element name="ContentProtection" type="ContentDescriptorType"
      minOccurs="0" maxOccurs="unbounded"/>
    <xs:element name="Accessibility" type="ContentDescriptorType"
      minOccurs="0" maxOccurs="unbounded"/>
    <xs:element name="Rating" type="ContentDescriptorType"
      minOccurs="0" maxOccurs="unbounded"/>
    <xs:element name="Viewpoint" type="ContentDescriptorType"
      minOccurs="0" maxOccurs="unbounded"/>
    <xs:element name="MultipleViews" type="MultipleViewsType" minOccurs="0"/>
    <xs:any namespace="##other" processContents="Iax" minOccurs="0"
    maxOccurs="unbounded"/>
 </xs:sequence>
 <xs:attribute name="group" type="xs:unsignedInt"/>
 <xs:attribute name="width" type="xs:unsignedInt"/>
 <xs:attribute name="height" type="xs:unsignedlnt"/>
 <xs:attribute name="parx" type="xs:unsignedInt"/>
 <xs:attribute name="pary" type="xs:unsignedInt"/>
  <xs:attribute name="lang" type="LangVectorType"/>
  <xs:attribute name="mimeType" type="xs:string"/>
  <xs:attribute name="startWithRAP" type="xs:boolean"/>
  <xs:attribute name="frameRate" type="xs:double"/>
  <xs:attribute name="maximumRAPPeriod" type="xs:double"/>
  <xs:attribute name="numberOfChannels" type="StringVectorType"/>
  <xs:attribute name="samplingRate" type="StringVectorType"/>
  <xs:attribute name="use" type="UseType"/>
  <xs:anyAttribute namespace="##other" processContents="lax"/>
  </xs: complexType>
  <xsaimpleType name="UseType">
  <xs:restriction base="xsatring">
    <xs: enumeration value=" signLang"/>
    <xs:enumeration value="subtitle"/>
    <xs:enumeration value="caption"/>
    <xs:enumeration value="description"/>
    <xs: enumeration value="plusDesc"/>
  </xs:restriction>
  </xs: simpleType>
  <!-- Generic named descriptive information about the content -->
  <xs:complexType name="ContentDescriptorType">
  <xs:sequence>
    <xs:element minOccurs="0" name="SchemeInformation" type="xsatring"/>
    <xs:element minOccurs="0" name="MP21Access" type="xs:string"/>
    <xs:any namespace="##other" processContents="lax" minOccurs="0"
    maxOccurs="unbounded"/>
  </xs:sequence>
  <xs:attribute name="schemeIdUri" type="xs:anyURI" use="required"/>
  <xs:attribute ref="xlink:href'/>
  <xs:attribute ref="xlink:actuate" default="onRequest"/>
 <xs:anyAttribute namespace="##other" processContents="lax"/>
 </xs:complexType>
``` |

Metadata describing relationships between representations is described as follows.

Metadata describing relationships between representation groups is relatively rare. For instance, it is difficult to notify a client which video stream a given audio description is associated with. In some cases, two representation groups may be semantically equal or only a single representation group may need to be selected depending on context. In the following description, two simple attributes are suggested for the foregoing purpose. Metadata described hereinafter may be useful for not only accessibility but also adaptability.

The Group element, the Adaptation Set element, the Representation element or the SubRepresentation element may further include the following attributes so as to describe relationships between representations.
- A usedWith attribute may indicate a list of one or more representations or representation groups. If a current representation or representation group is used, the usedWith attribute may be used along with a random item of the list. For instance, a representation group for an audio description may be used along with a particular representation group of a video component. A value of the usedWith attribute may be a whitespace-separated list. Each item of the whitespace-separated list may be an identification of a single representation group or a single representation. An identification of a representation group may be a value of a group attribute or adaptationSet attribute. An identification of a representation may have a format of a repid attribute. The repid attribute may be a value of an id attribute of the representation.
- An equivalentTo attribute may indicate a list of one or more representations or representation groups. A current representation may be used instead of a random item of the list. For example, a representation group for a subtitle may be used instead of a particular representation group of an audio component. The equivalentTo attribute may have the same format as the usedWith attribute.

Table 13 may illustrate XML syntax for describing relationships between representations of the Group element, the Adaptation Set element, the Representation element or the SubRepresentation element according to an example.

**[Table 13]**

| |
|---|
| ```
 <!-- RepresentationBase type; extended by other Representation-related types -->
 <xs:complexType name="RepresentationBaseType">
  <xs:sequence>
    <xs:element name="ContentProtection" type="ContentDescriptorType"
       minOccurs="0" maxOccurs="unbounded"/>
    <xs:element name="Accessibility" type="ContentDescriptorType"
      minOccurs="0" maxOccurs="unbounded"/>
    <xs:element name="Rating" type="ContentDescriptorType"
      minOccurs="0" maxOccurs="unbounded"/>
    <xs:element name="Viewpoint" type="ContentDescriptorType"
      minOccurs="0" maxOccurs="unbounded"/>
    <xs:element name="MultipleViews" type="MultipleViewsType" minOccurs="0"/>
    <xs:any namespace="##other" processContents="lax" minOccurs="0"
    maxOccurs="unbounded"/>
  </xs:sequence>
  <xs:attribute name="group" type="xs:unsignedInt"/>
  <xs:attribute name="width" type="xs:unsignedInt"/>
  <xs:attribute name="height" type="xs:unsignedInt"/>
  <xs:attribute name="parx" type="xs:unsignedlnt"/>
  <xs:attribute name="pary" type="xs:unsignedInt"/>
  <xs:attribute name="lang" type="LangVectorType"/>
  <xs:attribute name="mimeType" type="xsatring"/>
  <xs:attribute name="startWithRAP" type="xs:boolean"/>
  <xs:attribute name="frameRate" type="xs:double"/>
  <xs:attribute name="maximumRAPPeriod" type="xs:double"/>
  <xs:attribute name="numberOfChannels" type="StringVectorType"/>
  <xs:attribute name="samplingRate" type="StringVectorType"/>
  <xs:attribute name="usedWith" type="StringVectorType"/>
 <xs:attribute name="equivalentTo" type="StringVectorType"/>
 <xs:anyAttribute namespace="##other" processContents="lax"/>
 </xs:complexType>
 <!-- Type for space delimited list of strings -->
 <xs:simpleType name="StringVectorType">
 <xs:list itemType="xs:string"/>
 </xs:simpleType>
``` |

Metadata on bit depth is described as follows.

To select different representations for terminals having different display bit depths, the following attributes may be used for a representation and a representation group. Bit depth may refer to a number of bits used for representing luma/chroma samples of visual content.

Semantics of an attribute for bit depth is described as follows.

The Group element, the Adaptation Set element, the Representation element or the SubRepresentation element may further include the following attribute so as to provide bit depth.
- A bitDepth attribute may indicate a number of bits for representing luma/chroma samples of visual content. For example, if bit depth is changed in different video pictures, a value of the bitDepth attribute may be a maximum value of bit depths.

Table 14 may illustrate XML syntax for supporting bit depth of the Group element, the Adaptation Set element, the Representation element or the SubRepresentation element according to an example.

**[Table 14]**

| |
|---|
| ```
 <!-- RepresentationBase type; extended by other Representation-related types -->
 <xs:complexType name="RepresentationBaseType">
 <xs:sequence>
    <xs:element name="ContentProtection" type="ContentDescriptorType"
      minOccurs="0" maxOccurs="unbounded"/>
    <xs:element name="Accessibility" type="ContenDescriptorType"
       minOccurs="0" maxOccurs="unbounded"/>
    <xs:element name="Rating" type="ContentDescriptorType"
       minOccurs="0" maxOccurs="unbounded"/>
    <xs:element name="Viewpoint" type="ContentDescriptorType"
       minOccurs="0" maxOccurs="unbounded"/>
    <xs:element name="MultipleViews" type="MultipleViewsType" minOccurs="0"/>
    <xs:any namespace="##other" processContents="lax" minOccurs="0"
    maxOccurs="unbounded"/>
  </xs:sequence>
  <xs:attribute name="group" type="xs:unsignedInt"/>
  <xs:attribute name="width" type="xs:unsignedInt"/>
  <xs:attribute name="height" type="xs:unsignedInt"/>
  <xs:attribute name="parx" type="xs:unsignedInt"/>
  <xs:attribute name="pary" type="xs:unsignedInt"/>
  <xs:attribute name="lang" type="LangVectorType"/>
  <xs:attribute name="mimeType" type="xs:string"/>
  <xs:attribute name="startWithRAP" type="xs:boolean"/>
  <xs:attribute name="frameRate" type="xs:double"/>
  <xs:attribute name="maximumRAPPeriod" type="xs:double"/>
  <xs:attribute name="numberOfChannels" type="StringVectorType"/>
  <xs:attribute name="samplingRate" type="StringVectorType"/>
  <xs:attribute name="use" type="UseType"/>
  <xs:anyAttribute namespace="##other" processContents="lax"/>
  </xs:complexType>
  <xs:simpleType name="UseType">
  <xs:restriction base="xs:string">
    <xs:enumeration value="signLang"/>
    <xs:enumeration value="subtitle">
    <xs:enumeration value="caption"/>
    <xs:enumeration value= "description"/>
    <xs:enumeration value="plusDesc"/>
 </xs:restriction>
 </xs:simpleType>
 <!-- Generic named descriptive information about the content -->
 <xs:complexType name="ContentDescriptorType">
 <xs:sequence>
    <xs:element minOccurs="0" name="SchemeInformation" type="xs:string"/>
    <xs:element minOccurs="0" name="MP21Access" type="xs:string"/>
    <xs:any namespace="##other" processContents="lax" minOccurs="0"
    maxOccurs="unbounded"/>
 </xs:sequence>
 <xs:attribute name="schemeIdUri" type="xs:anyURI" use="required"/>
 <xs:attribute ref="xlink:href'/>
 <xs:attribute ref="xlink:actuate" default="onRequest"/>
 <xs:anyAttribute namespace="##other" processContents="lax"/>
 </xs:complexType>
``` |

To correspond with the foregoing description, the Representation Group element or the Adaptation Set element may further include two attributes, minBitDepth and maxBitDepth.

Semantics of attributes describing maximum bit depth and minimum bit depth is described as follows.

The Representation Group element, the Group element or the Adaptation Set element may further include the following attributes to describe maximum bit depth and minimum bit depth.
- An xlink:href attribute may specify reference to an external Group element or Adaptation Set element.
- An xlink:actuate attribute may provide processing instructions. The processing instructions may be "onLoad" or "onRequest."
- A minBitDepth attribute may specify a minimum bit depth value for all representations in a group or adaptation set.
- A maxBitDepth attribute may specify a maximum bit depth value for all representations in a group or adaptation set.

Table 15 may illustrate XML syntax for supporting a minimum bit depth value and a maximum bit depth value of the Representation Group element, the Group element or the Adaptation Set element according to an example.

**[Table 15]**

| |
|---|
| ```
 <!-- Group to contain information common to a group;
  extends RepresentationBaseType -->
  <xs:complexType name="GroupType">
  <xs:complexContent>
    <xs:extension base="RepresentationBaseType">
      <xs:sequence>
         <xs:element name="Representation" type="RepresentationType"
           minOccurs="0" maxOccurs="unbounded"/>
         <xs:element name="SegmentInfoDefault" type="SegmentInfoDefaultType"
         minOccurs="0"/>
      </xs:sequence>
      <xs:attribute ref="xlink:href'/>
      <xs:attribute ref="xlink:actuate" default="onRequest"/>
      <xs:attribute name="minBandwidth" type="xs:unsignedInt"/>
      <xs:attribute name="maxBandwidth" type="xs:unsignedInt"/>
      <xs:attribute name="minWidth" type="xs:unsignedInt"/>
      <xs:attribute name="maxWidth" type="xs:unsignedInt"/>
      <xs:attribute name="minHeight" type="xs:unsignedInt"/>
      <xs:attribute name="maxHeight" type="xs:unsignedInt"/>
      <xs:attribute name="minFrameRate" type="xs:double"/>
      <xs:attribute name="maxFrameRate" type="xs:double"/>
      <xs:attribute name="minBitDepth" type="xs:unsignedInt"/>
      <xs:attribute name="maxBitDepth" type="xs:unsignedInt"/>
      <xs:attribute name="subsegmentAlignment" type="xs:boolean"
      default="false"/>
      <xs:attribute name="segmentAlignmentFlag" type="xs:boolean"/>
      <xs:attribute name="bitStreamSwitchingFlag" type="xs:boolean"/>
      <xs:anyAttribute namespace="##other" processContents="lax"/>
    </xs:extension>
 </xs: complexContent>
 </xs:complexType>
``` |

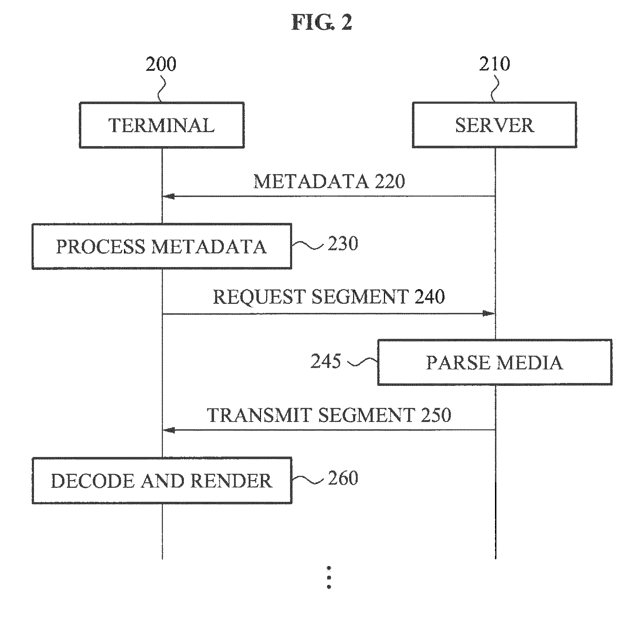

FIG. 2 is a signal flowchart illustrating a content processing method according to an embodiment of the present invention.

A terminal 200 may be a client of the aforementioned DASH.

The client of DASH may be compatible with a client specified in RFC 2616.

The client of DASH may generally use an HTTP GET method or HTTP partial GET method, as specified in RFC 2616, so as to access segments or part of the segments.

A server 210 may host segments of DASH. The server 210 may be compatible with a server specified in RFC 2616.

In operation 220, the terminal 200 may receive metadata on media content from the server 210. That is, the server 210 transmits the metadata on the media content to the terminal 200. The media content may include one or more periods.

The metadata may be an MPD.

The MPD may provide sufficient information for the terminal 200 to provide a user with a streaming service by accessing the segments through a specified protocol in a scheme of defined resources. Here, the specified protocol may be HTTP/1.1. The server 210 may provide an MPD delivery function. The MPD may be generated by DASH media presentation preparation.

In operation 230, the terminal 200 may process the received metadata. In operation 230, the terminal may extract information provided by the metadata or information included in the metadata.

In operations 240 to 250, the terminal 200 may access a segment of the media content based on the information provided by the metadata. The server 210 may be an HTTP server providing a DASH segment delivery function.

Here, each period may include one or more groups, and each group may include one or more representations of the media content. That is, each period may include the one or more representations of the media content. Thus, each representation may start from a start point of a period including the representation and continue to an end point of the period. Each representation may include one or more segments.

In operation 240, the terminal 200 may request a segment of the media content from the server 210 using a URL of the segment. Here, the URL may be interpreted in connection with the aforementioned BaseURL element. For example, the URL of the segment may be generated based on the BaseURL element.

The MPD may 1) request segments from the server 210 and 2) demultiplex, decode and render media streams included in the segments to provide the terminal 200 with sufficient information to provide a user with a streaming service.

The terminal 200 may request a segment appropriate for a particular period from the server 210 based on the processed metadata. That is, the requested segment may be selected based on the metadata. The terminal 200 may perform the HTTP GET method to request the segment from the server 210.

The metadata may include a "range" attribute. The request may be a request for bytes of a resource indicated by the URL which are specified by the "range" attribute.

The URL of the segment may be an absolute URL or relative URL.

The terminal 200 may select a period, an adaptation set and a representation using an element or attribute included in the metadata and select a segment to request based on an element or attribute of the selected period, adaptation set or representation.

For instance, as for one or more representations included in a period, each representation may include information for supporting disabled users having difficulties in perceiving the media content. A media component of the representation may be improved to cope with problems of the disabled users. The improvement may include at least one of improvement in contrast and adjustment of color. The information may indicate intended use of the representation. Here, the intended use may include at least one of a sign language, a subtitle, a caption and a description. Further, the information may include an attribute providing reference to external MPEG-21 DIA

For example, the metadata may include an attribute describing relationships between the one or more representations. A first representation among the one or more representations may include an attribute indicating a list of part of the one or more representations and be used along with one of the part of the representations. Here, the first representation may be a representation for an audio description, and the part of the representations may be representations of video components. A second representation among the one or more representations may include an attribute indicating a list of part of the one or more representation and be replaced with one of the part of the representations.

For example, as for one or more representations included in a period, each representation may include a bit depth attribute used for selecting different representations for terminals having different display bit depths.

The bit depth attribute may indicate a number of bits for representing luma/chroma samples of visual content.

In operation 245, in some cases, the server 210 may need to parse the media content (for example, an MP4 file for SVC) and extract a data part appropriate for the requested segment.

In operation 250, the server 210 may transmit segments appropriate for respective requests from the terminal 200 to the terminal 200. The terminal 200 may receive the segments from the server 210.

In operation 260, the terminal 200 may decode and render data of the media content included in the segments to play the media content.

The terminal 200 may repeat operations 220 to 260 to play the media content using received segments.

Technical content according to the embodiment of the present invention described above with reference to FIG. 1 may also be applied to the present embodiment. Thus, detailed description will be omitted herein.

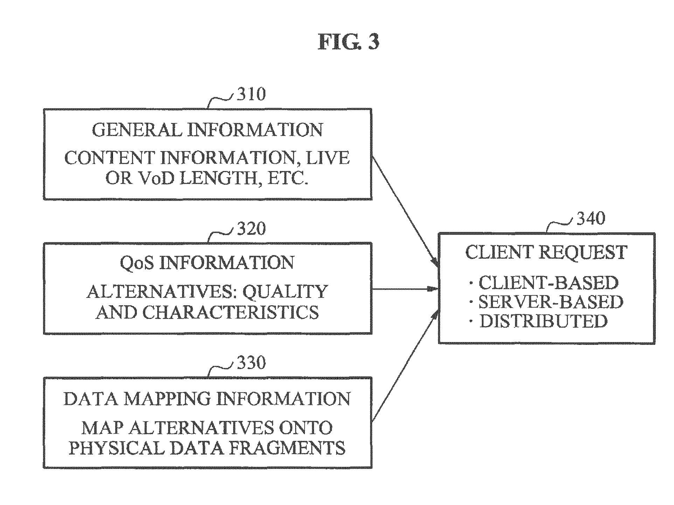

FIG. 3 illustrates categories of signaled information according to an embodiment of the present invention.

The signaled information (that is, metadata) may be divided into the following categories (1) to (4).
(1) General information 310: General information may include a general description of content, such as duration and start time, and a general description of each interval.
(2) Quality of service (QoS) information 320: QoS information may describe characteristics of alternatives, such as bitrate, resolution and quality. That is, the QoS information may describe characteristics of alternatives of content.

The alternatives may be physical (that is, generated in advance) or virtual (that is, generated on the fly). A client may select a fragment of an appropriate alternative based on information on the alternatives. Thus, adaptivity for context of terminals and networks may be supported.
(3) Mapping information 330: Mapping information may describe locations at which content is to be retrieved. Different alternatives may have the same or different locations depending on particular cases.
(4) Client request 340: This type of signaled information may conform to a format of an HTTP 1.1 request message. Parameters requested by a client may be derived from the information in categories (1) to (3).

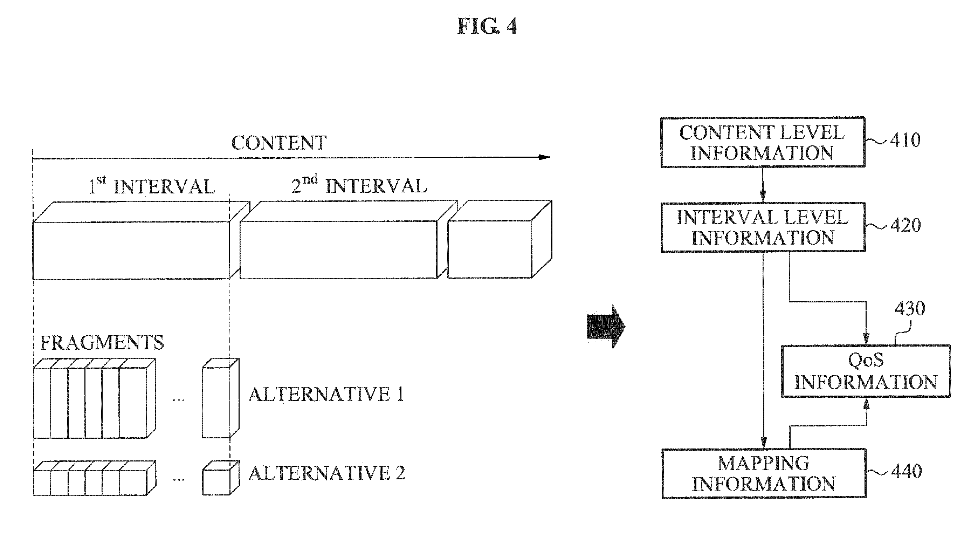

FIG. 4 illustrates a layer of a content division and levels of signaled information according to an embodiment of the present invention.

Signaled metadata according to embodiments of the present invention may be physically separated into content level information 410, interval level information 420, QoS information 430 and mapping information 440. Related portions of the content level information 410, the interval level information 420, the QoS information 430 and the mapping information 440 may be linked by referencing.

These portions of the signaled information may be combined in different ways to support flexibility.

For instance, when only the content level information 410 and the interval level information 420 are transmitted to a client, calculations for determining all alternatives and resolving locations may be performed by a server. Thus, when only the content level information 410 and the interval level information 420 are transmitted to the client, a processing model may be "server-based."

When the content level information 410, the interval level information 420 and the QoS information 430 are transmitted to the client, calculations for determining all alternatives and resolving locations may be performed in a distributed manner by the client and the server. Thus, when the content level information 410, the interval level information 420 and the QoS information 430 are transmitted to the client, the model maybe "distributed."

All the signaled information (the content level information 410. the interval level information 420, the QoS information 430 and the mapping information 440) is transmitted to the client, processing (that is, calculations for determining all alternatives and resolving locations) may be performed mostly (or entirely) by the client in this model, and thus the model may be client-based.

Separation of metadata parts may allow efficiency in storage and delivery. For example, during a session, metadata on the content level information 410 may be transmitted once, while only the interval level information 420 may be periodically updated. Similarly, one file including a QoS part 430 may be used for different intervals and different content.

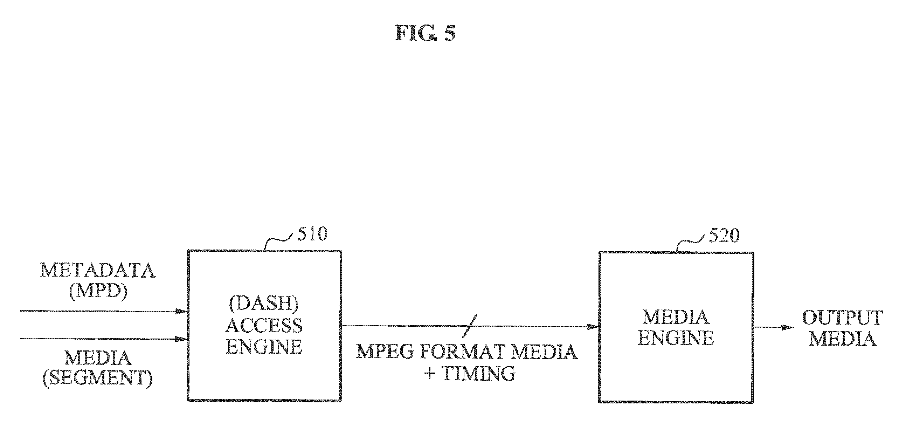

FIG. 5 is a diagram illustrating a structure of a terminal according to an embodiment of the present invention.

The structure of the terminal 100 to be described below may show logic components of a conceptual DASH client model.

The terminal 100 may include an access engine 510 and a media engine 520.

The access engine 510 may be a DASH access engine.

The access engine 510 may receive metadata (for example, an MPD) from a server 110.

The access engine 510 may construct requests and issue the constructed requests to the server 110.

The access engine 510 may receive content (for example, segments or part of the segments) from the server 110.

The access engine 510 may provide the content to the media engine 520.

Outputs from the access engine 510 may include media (or part of the media) of an MPEG container (for example, ISO/IEC 14492-12 ISO base media file format or ISO/IEC 13818-2 MPEG-2 transport stream). Also, the outputs from the access engine 510 may include timing information mapping internal timing of the media onto a timeline of a media presentation.

In addition, the access engine 510 may perform the functions performed by the terminal 200 in operations 220 to 260 described above with reference to FIG. 2.

The media engine 520 may play the provided content. That is, the media engine 520 may output media using the media and timing information output from the access engine 510.

Technical content according to the embodiment of the present invention described above with reference to FIGS. 1 to 4 may also be applied to the present embodiment. Thus, detailed description will be omitted herein.

Hereinafter, a bit depth attribute is described.

In Dynamic and Adaptive HTTP Streaming of MPEG (DASH), a representation is described as various metadata based on characteristics of terminals and content (resolution, bandwidth, or the like). Bit depth is one of content characteristics and may be included in an MPD. Hereinafter, metadata describing bit depth of media is defined and described.

Bit depth is a number of bits used for representing a sample of media content. For example, the content may be encoded using different bit depths (part of AVC profiles has a bit depth changing from 8 bits to 16 bits). Meanwhile, terminals may have different bit depths, respectively. An attribute is added to an adaptation set of a representation as follows so that the terminals select representations expressing appropriate bit depths for the respective terminals.

Option 1 is a mode of representing different bit depths using a single attribute, and option 2 is a mode of using a corresponding attribute to represent each bit depth.

### 1. Option 1

Table 16 illustrates common attribute and element of an adaptation set, a representation and a sub-representation.

**[Table 16]**

| Element or Attribute Name | Use | Description |
|---|---|---|
| *Common attribute and element* | | |
| @bitDepth | O | Indicates bit depth of a media content sample. When the bit depth is changed, the attribute indicates a maximum value of bit depth values. |

Table 17 illustrates syntax of an attribute describing bit depth.

**[Table 17]**

| |
|---|
| ```
  <!-- RepresentationBase type; extended by other Representation-related types -->
  <xs:complexType name="RepresentationBaseType">
    <xs:sequence>
    </xs:sequence>
    <xs:attribute name="bitDepth" type="xs:unsignedInt"/>
    <xs:anyAttribute namespace="##other" processContents="lax"/>
  </xs:complexType>
``` |

In accordance with bit depth, two attributes, minBitDepth and MaxBitDepth, are added to the adaptation set.

Table 18 illustrates semantics of attributes describing maximum bit depth and minimum bit depth.

**[Table 18]**

| Element or Attribute Name | | Use | Description |
|---|---|---|---|
| Adaptation Set | | | Description of Adaptation Set |
| | @xlink:href | O | Specifies a preference to a remote element entity that shall contain exactly one element of type AdaptationSet. |
| | @xlink:actuate | OD default: "onRequest " | Provides the processing instructions, which can be either "onLoad" or "onRequest." |
| | *CommonAttributesElements* | - | |
| | ... | | |
| | @minBitDepth | O | Indicates a minimum bit depth value in a bit depth range of all representations included in the adaptation set. |
| | @maxBitDepth | O | Indicates a maximum bit depth value in a bit depth range of all representations included in the adaptation set. |

Table 19 illustrates syntax of the attributes describing the maximum bit depth and the minimum bit depth.

**[Table 19]**

| |
|---|
| ```
 <!-- Adaptation Set-->
 <xs:complexType name="AdaptationSetType">
     <xs: complexContent>
        <xs:extension base="RepresentationBaseType">
          <xs:sequence>
          </xs:sequence>
          <xs:attribute name="minBitDepth" type="xs:unsignedInt"/>
          <xs:attribute name="maxBitDepth" type="xs:unsignedInt"/>
          <xs:anyAttribute namespace="##other" processContents="lax"/>
        </xs:extension>
     </xs:complexContent>
   </xs:complexType>
``` |

### 2. Option 2

In option 2, bit depth information on luma and bit depth information on chroma are differently displayed.

Table 20 illustrates common attributes and elements of an adaptation set, a representation and a sub-representation.

**[Table 20]**

| Element or Attribute Name | Use | Description |
|---|---|---|
| *Common attributes and elements* | | |
| @lumaBitDepth | O | Indicates bit depth of a video luma component sample. When the bit depth is changed, the attribute indicates a maximum value of bit depth values. |
| @chromaBitDepth | O | Indicates bit depth of a video chroma component sample. When the bit depth is changed, the attribute, indicates a maximum value of bit depth values. |

Table 21 illustrates syntax of an attribute describing bit depth.

**[Table 21]**

| |
|---|
| ```
  <!-- RepresentationBase type; extended by other Representation-related types -->
  <xs:complexType name="RepresentationBasetype">
     <xs:sequence>
     </xs:sequence>
       ...
     <xs:attribute name="lumaBitDepth" type="xs:unsignedInt"/>
     <xs:attribute name="chromaBitDepth" type="xs:unsignedInt"/>
     <xs:anyAttribute namespace="##other" processContents="lax"/>
   </xs:complexType>
``` |

In accordance with the attribute, four attributes, minLumaBitDepth, maxLumaBitDepth, minChromaBitDepth and maxBitDepth, are added to the adaptation set.

Table 22 illustrates semantics of attributes describing maximum bit depths and minimum bit depths.

**[Table 22]**

| Element or Attribute Name | | Use | Description |
|---|---|---|---|
| Adaptation Set | | | Description of Adaptation Set |
| | @xlink:href | O | Specifies a reference to a remote element entity that shall contain exactly one element of type AdaptationSet. |
| | @xlink:actuate | OD default: "onRequest " | Provides the processing instructions, which can be either "onLoad" or "onRequest." |
| | *CommonAttributesElements* | - | |
| | ... | | |
| | @ minLumaBitDepth | O | Indicates a minimum bit depth value in a luma bit depth range of all representations included in the adaptation set. |
| | @ maxLumaBitDepth | O | Indicates a maximum bit depth value in a luma bit depth range of all representations included in the adaptation set. |
| | @ minChromaBitDepth | O | Indicates a minimum bit depth value in a chroma bit depth range of all representations included in the adaptation set. |
| | @ maxChromaBitDepth | O | Indicates a maximum bit depth value in a chroma bit depth range of all representations included in the adaptation set. |

Table 23 illustrates syntax of the attributes describing the maximum bit depths and the minimum bit depths.

**[Table 23]**

| |
|---|
| ```
 <!-- Adaptation Set -->
 <xs:complexType name="AdaptationSetType">
     <xs:complexContent>
        <xs:extension base="RepresentationBaseType">
          <xs:sequence>
          </xs:sequence>
          <xs:attribute name="minLumaBitDepth" type="xs:unsignedInt"/>
          <xs:attribute name="maxLumaBitDepth" type="xs:unsignedlnt"/>
          <xs:attribute name="minChromaBitDepth" type="xs:unsignedInt"/>
          <xs:attribute name="maxChromaBitDepth" type="xs:unsignedInt"/>
          <xs:anyAttribute namespace="##other" processContents="lax"/>
        </xs:extension>
     </xs:complexContent>
  </xs:complexType>
``` |

The methods according to the embodiments may be realized as program instructions implemented by various computers and be recorded in non-transitory computer-readable media. The media may also include, alone or in combination, the program instructions, data files, data structures, and the like. The program instructions recorded in the media may be designed and configured specially for the present invention or be known and available to those skilled in computer software. Examples of the non-transitory computer readable recording medium may include magnetic media such as hard disks, floppy disks, and magnetic tape; optical media such as CD ROM disks and DVDs; magneto-optical media such as floptical disks; and hardware devices that are specially configured to store and perform program instructions, such as read-only memory (ROM), random access memory (RAM), flash memory, and the like. Examples of program instructions include both machine codes, such as produced by a compiler, and higher level language codes that may be executed by the computer using an interpreter. The described hardware devices may be configured to act as one or more software modules in order to perform the operations of the above-described exemplary embodiments, or vice versa.

Although a few exemplary embodiments of the present invention have been shown and described with reference to the accompanying drawings, the present invention is not limited to the described exemplary embodiments. Instead, it will be apparent to those skilled in the art that various modifications and variations may be made from the foregoing descriptions.

Therefore, the scope of the present invention is not limited by the aforementioned embodiments by is defined by the appended claims and their equivalents.

## Claims

1. A media providing method comprising:
receiving metadata on media content comprising one or more periods;
accessing segments of media based on information provided by the metadata; and
decoding and rendering data on the media content comprised in the segments,
wherein each period comprises one or more representations of the media and each representation comprises information for supporting disabled users having difficulties in perceiving the media content.

2. The media providing method of claim 1, wherein a media component of the representation is improved to cope with a problem of a disabled user, and the improvement comprises at least one of improvement in contrast and adjustment of color.

3. The media providing method of claim 1, wherein the information for supporting the disabled users indicates intended use of the representation and the intended use comprises at least one of a sign language, a subtitle, a caption and a description.

4. The media providing method of claim 1, wherein the information for supporting the disabled users comprises an attribute providing reference to external MPEG-21 Digital Item Adaptation (DIA).

5. A media providing method comprising:
receiving metadata on media content comprising one or more periods;
accessing segments of media based on information provided by the metadata; and
decoding and rendering data on the media content comprised in the segments,
wherein each period comprises one or more representations of the media and the metadata comprises an attribute describing a relationship between the one or more representations.

6. The media providing method of claim 5, wherein a first representation of the one or more representations comprises an attribute indicating a list of part of the one or more representations and is used together with one of the part of the representations.

7. The media providing method of claim 6, wherein the first representation is a representation for an audio description.

8. The media providing method of claim 6, wherein each of the part of the representations is a representation of a video component.

9. The media providing method of claim 5, wherein a first representation of the one or more representations comprises an attribute indicating a list of part of the one or more representations.

10. The media providing method of claim 9, wherein one of the part of the representations is used to replace the first representation.

11. A media providing method comprising:
receiving metadata on media content comprising one or more periods;
accessing segments of media based on information provided by the metadata; and
decoding and rendering data on the media content comprised in the segments,
wherein each period comprises one or more representations of the media and each presentation comprises a bit depth attribute used to select different representations for terminals having different display bit depths.

12. The media providing method of claim 11, wherein the bit depth attribute indicates a number of bits for representing a luma or chroma sample of visual content.

13. The media providing method of claim 11, wherein the bit depth attribute comprises at least one of minimum and maximum depth attributes in a bit depth range of all the representations.

14. A media providing terminal comprising:
an access engine to receive metadata on media content comprising one or more periods, to receive segments of media based on information provided by the metadata, and to decode data on the media comprised in the segments; and
a media engine to be provided with the data on the media from the access engine and to output the media,
wherein each period comprises one or more representations of the media and each representation comprises information for supporting disabled users having difficulties in perceiving the media content.

15. A media providing terminal comprising:
an access engine to receive metadata on media content comprising one or more periods, to receive segments of media based on information provided by the metadata, and to decode data on the media comprised in the segments; and
a media engine to be provided with the data on the media from the access engine and to output the media,
wherein each period comprises one or more representations of the media and the metadata comprises an attribute describing a relationship between the one or more representations.

16. A media providing terminal comprising:
an access engine to receive metadata on media content comprising one or more periods, to receive segments of media based on information provided by the metadata, and to decode data on the media comprised in the segments; and
a media engine to be provided with the data on the media from the access engine and to output the media,
wherein each period comprises one or more representations of the media and each presentation comprises a bit depth attribute used to select different representations for terminals having different display bit depths.
